# EUROPEAN PATENT APPLICATION

(11) **EP 3 176 471 A1**
(43) Date of publication of application: **07.06.2017**
(21) Application number: 16205074.4
(22) Date of filing: 02.05.2013
(51) Int. Cl.: F16H 57/08

(54) **HOUSING**

(30) Priority: 02.05.2012 GB 201207660
(62) Divisional of application: 13721951.5
(71) Applicant: Jaguar Land Rover Limited, Coventy, Warwickshire CV3 4LF (GB)
(72) Inventor: Tarver, Graham, Coventry, Warwickshire CV3 4LF (GB); Copping, Steve, Coventry, Warwickshire CV3 4LF (GB); Nevin, Patrick, Coventry, Warwickshire CV3 4LF (GB); Clayton, David, Coventry, Warwickshire CV3 4LF (GB)
(74) Representative: Borton, Claire

(57) **Abstract**

The present invention relates to a housing, such as a transmission housing (103), configured to control vibrations. A transmission housing (103) according to an embodiment of the present invention has one or more vibration control panels (105) formed in a sidewall of the housing (103). The vibration control panel (105) is inset from a surrounding section of the sidewall (103).

## Description

### TECHNICAL FIELD

The present invention relates to a housing, such as a transmission housing. The present invention has particular application in an automotive vehicle, but is not limited in this respect. Alternative automotive uses could be (but not limited to) axle covers, sump pans and engine blocks.

### BACKGROUND OF THE INVENTION

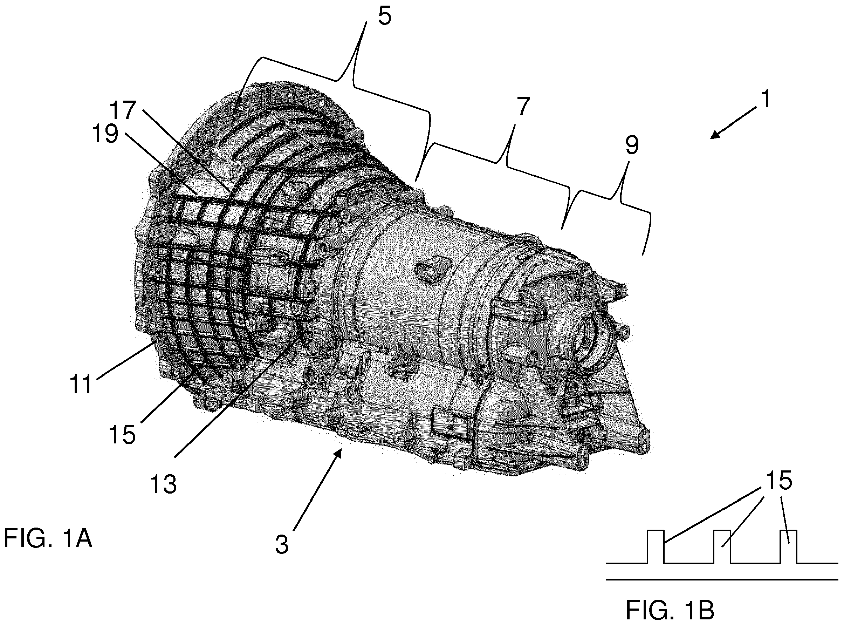

A transmission 1 can be used to transmit power to a live axle in an automotive vehicle having an internal combustion engine. The layout of the transmission 1 could be for a manual with conventional clutch and flywheel, automated manual, automatic with torque converter, automatic with wet clutch, CVT and hybrids, in a north/south (rear wheel drive or front wheel drive), east/west (transverse and also incorporating a final drive unit) and transaxle layouts. Figure 1A shows a north/south transmission 1 comprises a housing 3 made up of a bellhousing 5, a transmission cylinder 7 and an end section 9. The bellhousing 5 houses a power transfer mechanism (i.e. flywheel and clutch/torque converter and flexplate, hybrid machine etc). The transmission cylinder 7 has a generally cylindrical form in north/south layouts and houses the speed-changing gears of the transmission 1. The end section 9 seals the cylinder 7 and supports an output bearing for mounting an output shaft for connection to a driveshaft (not shown) and normally incorporates the powertrain rear mounting system.

To accommodate the power transfer mechanism, the bellhousing 5 usually has a truncated conical form. In particular, the bellhousing 5 tapers in a longitudinal direction from a first end 11 which is connected to the internal combustion engine (not shown) to a second end 13 which is connected to the transmission cylinder 7. A lattice of external ribs 15 is formed on an outer surface of the bellhousing 5 to reinforce the structure. The external ribs 15 comprise hoops 17 and longitudinal runners 19. A cross section through the bellhousing 5 is shown in Figure 1 B to illustrate the profile of the external ribs 15.

In use, the transmission 1 is subject to vibrations and combustion noise from the engine, motor noise from an electric motor or contact noise from the transmission gears. These vibrations travel through the housing 3 and are output as sound waves. It is recognised that the truncated conical shape of the bellhousing 5 can provide an efficient mechanism for converting mechanical vibrations, for example generated by the internal combustion engine, into sound waves.

With a view to suppressing the sound waves, it is known to provide a sound-dampening jacket over the transmission housing 3 and, in particular, around the bellhousing 5. However, the efficacy of the sound-dampening jacket may vary for different operating conditions of the engine and will invariably increase the weight and cost of the transmission 1, and affect serviceability of the unit. The jackets sound dampening performance can be adversely affected if holes or gaps are present, and its durability can be adversely affected if the local environment is subject to radiated heat from the powertrain or its associated components (exhaust, EGR etc).

It is against this background that the present invention has been formulated. The present invention sets out to help ameliorate or overcome at least some of the problems associated with prior art transmissions. Other aims and advantages of the invention will be apparent from the following description, claims and drawings.

### SUMMARY OF THE INVENTION

Aspects of the present invention relate to a transmission housing, to a vehicle powertrain component housing and to a vehicle.

In one aspect, the present invention provides a vehicle powertrain component housing comprising at least one elongate undulation in a sidewall of the housing for controlling vibration, said elongate undulation forming a ridge on a first surface of the sidewall and a corresponding groove on a second surface of the sidewall.

The sidewall may have a substantially uniform thickness across said at least one elongate undulation.

The at least one elongate undulation may be annular and may extend around at least a portion or portions of the housing.

The ridge may be formed on an outer surface of the sidewall and the corresponding groove may be formed on an inner surface of the sidewall such that said at least one elongate undulation projects outwardly from said sidewall.

In a further aspect, the present invention provides a vehicle powertrain component housing comprising at least one vibration control panel formed in a sidewall of the housing, said at least one vibration control panel being radially offset from a surrounding section of the sidewall.

An outer surface of said at least one vibration control panel may be at least substantially free of reinforcing ribs.

The at least one vibration control panel may be formed integrally with the surrounding section of the sidewall.

The at least one vibration control panel may be joined to the surrounding section of the sidewall by a curved section of the sidewall.

The thickness of each vibration control panel and the surrounding section of the sidewall may be substantially uniform.

The at least one vibration control panel may have a concave profile or a convex profile.

The at least one vibration control panel may have a part cylindrical profile.

The at least one vibration control panel may have a plan form which is oval. The oval may have first and second ends, the first end of said oval being larger than the second end.

A plurality of said vibration control panels may be provided around a circumference of the housing.

The vibration control panels may have two or more different sizes.

Two or more of said vibration control panels may be offset relative to each other in a longitudinal direction.

The housing may be formed as a unitary structure. The housing may be formed by casting.

The housing may be a transmission housing. The transmission housing may have a cylindrical or truncated conical shape. The transmission housing may be a bellhousing.

Alternatively, the housing may be one of an axle cover, a sump pan or an engine block.

In another aspect, the present invention provides a transmission, an engine or a vehicle having a housing as described above.

In a further aspect, the present invention relates to a transmission housing comprising at least one vibration control panel formed in a sidewall of the housing, said at least one vibration control panel being radially offset from a surrounding section of the sidewall. The at least one vibration control panel can form an irregularity in the transmission housing which can segregate different regions of the transmission housing, thereby controlling the propagation of vibrations. At certain frequencies, the phase of the vibrations in different regions can be altered to reduce constructive interference or cause phase cancellation. At least in preferred embodiments, the at least one vibration control panel can affect the radiated noise. It is understood that the radiated power (dB) can be reduced at least at certain operating frequencies. In certain embodiments, the at least one vibration control panel can help to reinforce the transmission housing. Appropriate positioning and sizing of the at least one vibration control panel can be employed to tune the system, for example to suppress the output of noise at certain frequencies. The at least one vibration control panel can be adapted to suppress the output of noise resulting from engine vibrations and/or transmission vibrations.

At least in some embodiments, the use of vibration control panels can offer reduced mass compared to prior art housings. An outer surface of the at least one vibration control panel can be at least substantially free of reinforcing ribs and the like. The at least one vibration control panel can be formed integrally with the surrounding section of the sidewall. The at least one vibration control panel can be joined to the surrounding section of the sidewall by a continuous, curved section of the sidewall. The outer surface of the at least one vibration control panel can, for example, be arranged substantially concentrically with an outer surface of the transmission housing.

The at least one vibration control panel could be defined by a localised thickening or a localised thinning of the sidewall of the housing. Alternatively, the thickness of each vibration control panel and the surrounding section of the sidewall can be substantially constant. Thus, each vibration control panel can be a continuation of the sidewall, albeit radially offset from the surrounding section.

The at least one vibration control panel can be displaced radially inwardly or outwardly from the surrounding section of the sidewall. The transmission housing could comprise one or more vibration control panels which are displaced radially inwardly; and one or more vibration control panels which are displaced radially outwardly. For example, alternate vibration control panels could be positioned inwardly and outwardly.

The at least one vibration control panel can have a concave profile. For example, the at least one vibration control panel can have a part cylindrical profile. Alternatively, the at least one vibration control panel can have a convex profile.

The at least one vibration control panel can have a longitudinal axis arranged substantially parallel to a longitudinal axis of the transmission housing. The vibration control panel can be elongated in the direction of said longitudinal axis. The at least one vibration control panel can be symmetrical about one or more axis, for example symmetrical about a longitudinal axis and/or a transverse axis. Alternatively, the at least one vibration control panel can be asymmetrical. In plan form, the at least one vibration control panel can be in the shape of, for example but not limited to: a polygon, a rhomboid, a parallelogram, a kite, an oval, an ellipse, a circle, an egg or a teardrop. Other shapes could be employed without departing from the present invention. The vibration control panel can have one or more corners which can be rounded. The at least one vibration control panel can be in the shape of an oval having first and second ends, the first end of the oval can be larger than the second end.

A plurality of the vibration control panels can be provided around a circumference of the transmission housing. The vibration control panels can have a regular or irregular spacing around the circumference of the transmission housing. The vibration control panels can have different sizes and/or shapes. The vibration control panels can have different or varying thicknesses.

The vibration control panels can be offset from each other in a direction parallel to the longitudinal axis of the transmission housing. For example, adjacent vibration control panels can be offset relative to each other. The vibration control panels can be the same size or different sizes.

In a further aspect, the present invention relates to a transmission housing comprising at least one elongate undulation in a sidewall of the housing for controlling vibration, said elongate undulation forming a ridge on a first surface of the sidewall and a corresponding groove on a second surface of the sidewall. The elongate undulation can form an irregularity in the sidewall of the housing which can affect the propagation of vibrations. The elongate undulation can also stiffen the transmission housing. The elongate undulation can be employed instead of, or in addition to external reinforcing ribs.

The use of elongate undulations can offer reduced mass compared to prior art housings. The sidewall can have a substantially uniform thickness across said at least one elongate undulation.

The at least one elongate undulation can be annular. The at least one elongate undulation can extend around at least a portion or portions of the transmission housing. The elongate undulation can have a spiral or helical form.

The ridge can be formed on an outer surface of the sidewall and the corresponding groove formed on an inner surface of the sidewall. Accordingly, the at least one elongate undulation can project outwardly from the sidewall. In an alternate arrangement, the ridge could be formed on an inner surface of the sidewall and the corresponding groove formed on an outer surface of the sidewall. The elongate undulation in this arrangement can project inwardly from the sidewall.

The transmission housing described herein can have a cylindrical or truncated conical shape. The transmission housing can be a single component having a unitary structure. The transmission housing described herein can be formed by casting. The transmission housing can be a one-piece casting. The transmission housing can be a bellhousing.

It will be appreciated that the features described herein for the at least one vibration control panel provided on a transmission housing can also be applied to the broader concept of a housing having at least one vibration control panel. In a further aspect, the present invention relates to a housing comprising at least one vibration control panel formed in a sidewall of the housing. The at least one vibration control panel can be offset from a surrounding section of the sidewall. Accordingly, the housing can have a contoured profile. The at least one vibration control panel can each be spaced inwardly or outwardly of the surrounding section of the sidewall.

The sidewall of the housing can have a substantially uniform thickness. In particular, the at least one vibration control panel can have substantially the same thickness as the surrounding section of the sidewall. Alternatively, the vibration control panel can have a larger or smaller thickness than the surrounding section of the sidewall. The at least one vibration control panel can be formed without reinforcing ribs extending over its surface.

The housing can have a unitary construction. For example, the housing can be a cast housing. The housing can be a transmission housing, an axle cover, a sump pan or an engine block, for example.

Within the scope of this application it is expressly intended that the various aspects, embodiments, examples and alternatives, and in particular the individual features thereof, set out in the preceding paragraphs, in the claims and/or in the following description and drawings may be taken independently or in any combination. For example, features disclosed in connection with one embodiment are applicable to all embodiment unless such features are incompatible.

### BRIEF DESCRIPTION OF THE DRAWINGS

An embodiment of the present invention will now be described, by way of example only, with reference to the accompanying figures, in which:
Figure 1A shows a perspective view of a conventional north/south transmission housing;
Figure 1B shows a cross section through a portion of the transmission housing shown in Figure 1 A;
Figure 2 shows a perspective view of an exterior of a bellhousing in accordance with a first embodiment of the present invention;
Figure 3 shows a perspective view of an interior of the bellhousing shown in Figure 2;
Figure 4 shows a transverse cross-section of the bellhousing shown in Figures 2 and 3;
Figure 5 shows a radiated power model comparing a prior art transmission with the transmission according to the first embodiment of the present invention;
Figure 6 shows a perspective view of a transmission housing in accordance with a second embodiment of the present invention; and
Figure 7 show the cross-section through the transmission housing according to the second embodiment of the present invention.

### DETAILED DESCRIPTION OF AN EMBODIMENT

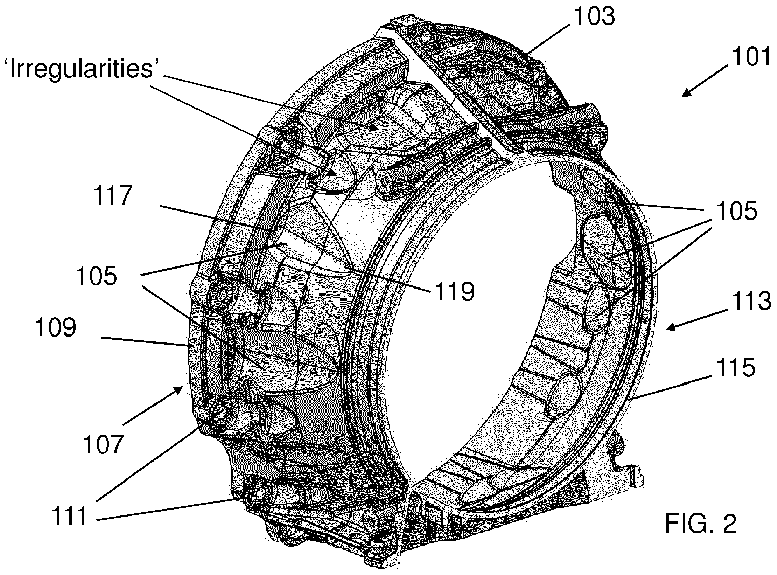

A contoured bellhousing 101 in accordance with a first embodiment of the present invention is shown in Figures 2, 3 and 4. The contoured bellhousing 101 comprises a housing 103 having a plurality of vibration control panels 105 which, as described herein, are adapted to control the propagation of vibrations. The contoured bellhousing 101 in the present embodiment forms part of a north/south layout transmission housing for use in an automotive vehicle having an internal combustion engine (not shown).

The housing 103 is a single-piece casting having a generally truncated conical form for accommodating a flywheel and clutch mechanism. A first end 107 of the housing 103 comprises a first circular flange 109 having a series of circumferentially spaced apertures 111 for mounting the contoured bellhousing 101 to a casing of the internal combustion engine. A second end 113 of the contoured bellhousing 101 comprises a second circular profile 115 for interfacing with, or sealing with the transmission cylinder (not shown).

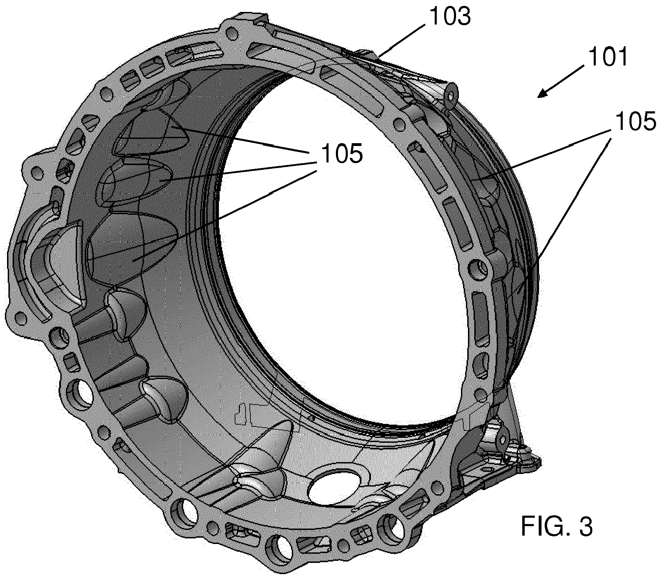

The vibration control panels 105 each have a smooth, substantially continuous outer surface and are located between the first and second circular flanges 109, 115. The vibration control panels 105 are radially offset from the apertures 111. The vibration control panels 105 are formed integrally with the housing 103 and will now be described with reference to Figures 2 and 3.

In plan form, the vibration control panels 105 each have a generally asymmetrical oval shape having first and second rounded ends 117, 119. The first rounded end 117 is positioned proximal the first circular flange 109 and is larger than the second rounded end 119 positioned proximal the second circular flange 115 of the housing 103. Thus, the plan form of each vibration control panel 105 is generally teardrop or egg shaped. This oval shape can be caused due to the tapered shape of the bellhousing, or due to die casting requirements. Other shapes could be employed without departing from the present invention.

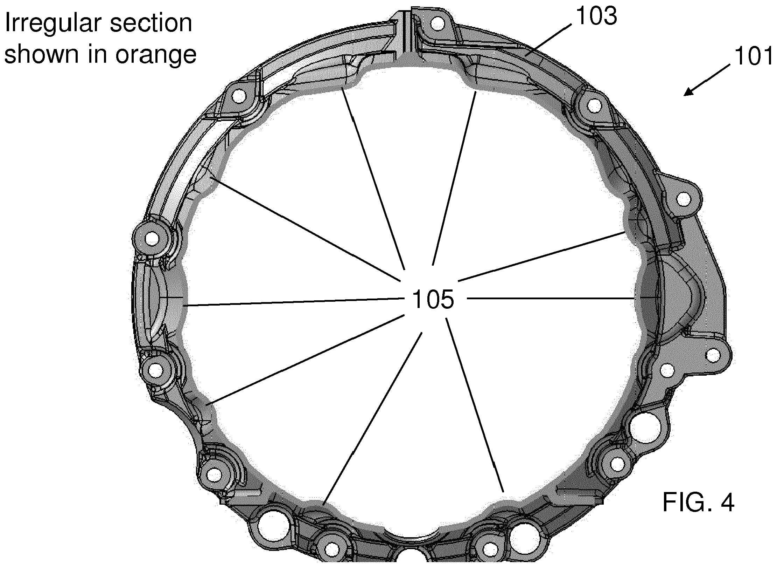

In cross-section, the vibration control panels 105 each have a concave profile which is part cylindrical. The vibration control panels 105 each form a depression or recess in the surface of the housing 103. As shown in Figure 4, the housing 103 and the vibration control panels 105 have a substantially uniform thickness around at least substantially the entire circumference of the housing 103. However, the vibration control panels 105 define irregularities in the profile of the housing 103. Accordingly, the housing 103 is irregular in both transverse and longitudinal section.

In use, the contoured bellhousing 101 is exposed to vibrations originating from the combustion engine and also the transmission. Deformation of the housing causes noise to be radiated to ambient air. In the prior art transmission 1 illustrated in Figure 1A, the tapered profile of the bellhousing 5 can reduce the impedance difference between the relatively dense material forming the housing 3 and the low density ambient air. It is believed that this unintentional matching of the impedance can increase the acoustic output from the transmission 1. Furthermore, the lattice of external ribs 15 could potentially facilitate the propagation of sound waves through and/or from the bellhousing 5.

In contrast, the vibration control panels 105 employed in embodiments of the present invention serve to break up the surface, reduce radiating efficiency and sound power. The vibration control panels suppress vibrations at the housing surface lowering the noise transmitted from the housing and scatter sound waves in the housing 103 helping to absorb, reflect or counteract the phases of the sound energy. The vibration control panels 105 may also serve to preserve the impedance difference between the housing 103 and the ambient air, thereby reducing the radiated power (dB) from the transmission 1. The vibration control panels 105 may also affect the diffusion of sound energy from the housing 103.

The vibration control panels 105 around the housing 103 are different sizes and/or shapes. This arrangement helps to alter the vibration characteristics within each vibration control panel 105. Different vibration characteristics can advantageously be introduced between adjacent vibration control panels 105. The interaction of the vibrations can be affected by the relative size and/or shape of the vibration control panels 105. Accordingly, the development and propagation of vibrations can be controlled, even for vibrations originating from a common source (typically the internal combustion engine, electric motor or the speed-changing gears of the transmission). By appropriate positioning of the vibration control panels 105 within the housing 103, radiated efficiency and sound power can be targeted and enhanced for frequency and response. The vibrations can be self-cancelling (i.e. phase cancellation). The likelihood of resonance occurring in the housing 103 can also be reduced.

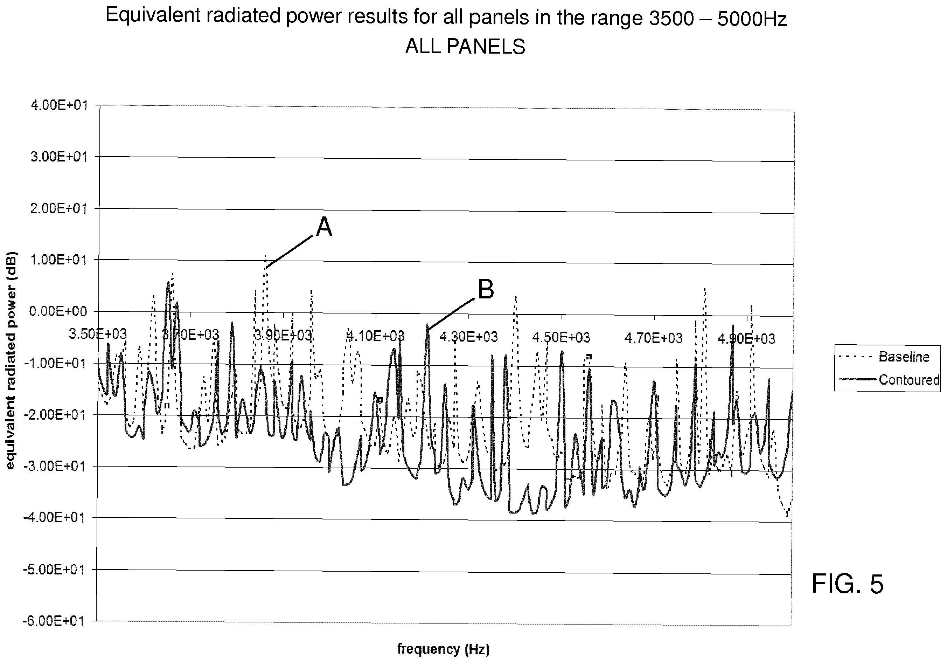

Figure 5 shows the results of a computer simulation of the radiated power (dB) from the housing 103 at a range of frequencies (3500-5000Hz). The radiated power for a conventional bellhousing 5 is illustrated by the dotted baseline A, and the radiated power for a contoured bellhousing 101 according to the present invention is shown by a continuous line B. At least at certain frequencies, the contoured bellhousing 101 according to embodiments of the present invention reduces the radiated power. The location, shape and/or size of the vibration control panels 105 can be modified to provide desirable output characteristics, for example to suppress the output of sound at particular frequencies.

In the light of the above it will be appreciated that the vibration control panels 105 employed in embodiments of the present invention can control the propagation of vibrations in the housing 103. Specifically, the different sizes/positions/shapes of the vibration control panels 105 can control the vibrations in the housing 103, for example by altering the phase and/or frequency of the vibrations and reduced radiating efficiency. The vibration control panels 105 can reduce constructive interference and/or cause destructive interference (phase cancellation) both in the housing and radiated from the housing. The vibrations can thereby self-cancel each other (either partially or completely) at certain frequencies.

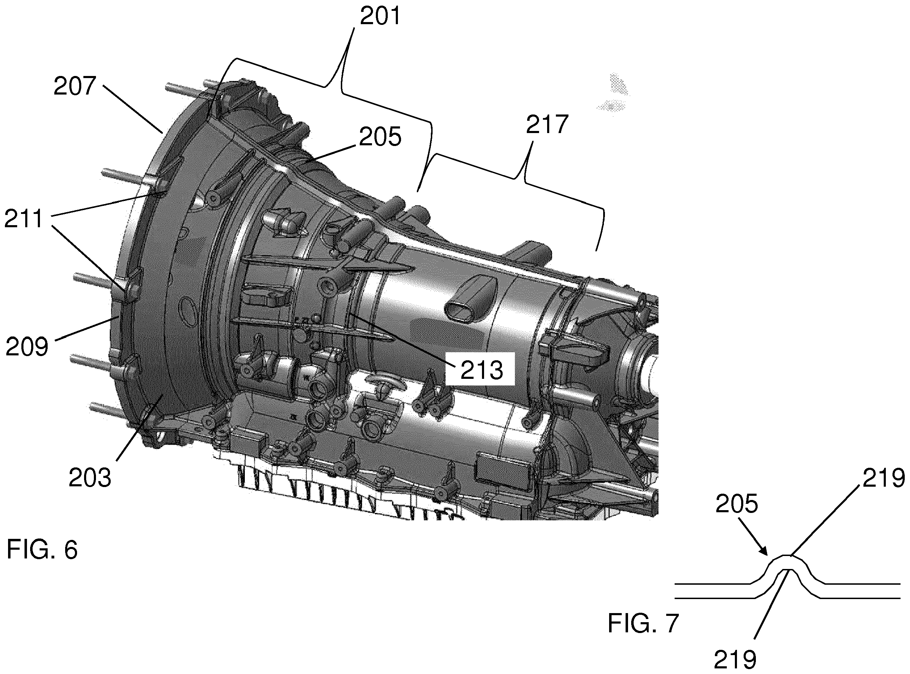

A contoured bellhousing 201 according to a second embodiment of the present invention is shown in Figure 6. The contoured bellhousing 201 is again for use in a north/south layout transmission for an automotive vehicle. The contoured bellhousing 201 comprises a housing 203 having an annular undulation 205 for controlling the propagation of vibrations in the contoured bellhousing 201.

The arrangement of the contoured bellhousing 201 is the same as that of the first embodiment. Specifically, the housing 203 is a single-piece casting having a generally truncated conical form. A first end 207 of the housing 203 comprises a first circular flange 209 having a series of circumferentially spaced apertures 211 for mounting the contoured bellhousing 201 to an internal combustion engine. A second end 213 of the contoured bellhousing 201 comprises a second circular profile 215 for interfacing with, or sealingly engaging a transmission cylinder 217.

As shown in Figure 7, the annular undulation 205 forms a contoured hoop having a ridge 219 on an outer surface of the housing 203 and a corresponding groove 221 on an inner surface of the housing 203. The thickness of the housing 203 across the annular undulation 205 is at least substantially constant. The annular undulation 205 stiffens the contoured bellhousing 201 and thereby provides reinforcing. The annular undulation 205 can be formed using less material than the lattice of reinforcing ribs employed in the prior art transmission housing.

The annular undulation 205 forms an irregularity in the housing 203. In use, the annular undulation 205 controls the propagation of vibrations through the housing 203 and can help to reduce the radiated noise and sound power.

It will be appreciated that more than one annular undulation 205 can be formed in the housing 203. Moreover, the undulation could extend axially along the housing 203. Indeed, a combination of annular and axial undulations could be formed in the housing 203. Alternatively, the undulation could be formed in a closed loop, for example having a polygonal or oval shape in plan form. The undulation could be formed partially or completely around a vibration control panel of the type described herein. For example, the undulation could surround an inner panel which is offset from the surrounding section of sidewall.

The first and second embodiments described herein are transmission housings 103; 203. The present invention can be employed in other applications, particularly housing having a unitary structure (for example formed by casting). The present invention could be embodied in an oil pan (formed by casting or pressing); or a cast component to suppress combustion and/or gear noise.

The vibration control panels 105 have been described as being formed integrally with the housing 103. It will be appreciated that the vibration control panels 105 could be formed separately and coupled to the housing 103. For example, the vibration control panels 105 could be inserts moulded into the housing 103. The vibration control panels 105 could be formed from the same material as the rest of the housing 103 or from a different material.

It will be appreciated that various changes and modifications can be made to the embodiment described herein without departing from the scope of the present invention. For example, the vibration control panels 105 described herein could have a non-uniform or irregular thickness. Likewise, the vibration control panels 105 could have a non-uniform cross-section. A series of ridges or undulations could be formed in the vibration control panels 105 to control the propagation of vibrations in the housing 103.

Furthermore, although the bellhousings 101, 201 described herein form part of a north/south layout transmission, the present invention is not limited to this application. The present invention can be embodied in housings, particularly (but not limited to) cast housings, with a view to controlling the propagation of vibrations. The present invention may be applied to a housing of a component of a vehicle powertrain. Alternative automotive applications for the present invention include, for example, axle covers, sump pans and engine blocks. The present invention could be implemented in technical fields other than the automotive industry.

## Claims

1. A transmission housing (103) comprising at least one vibration control panel (105) formed in a sidewall of the housing (103), said at least one vibration control panel (105) being radially offset from a surrounding section of the sidewall.

2. A transmission housing as claimed in claim 1, wherein an outer surface of said at least one vibration control panel (105) is at least substantially free of reinforcing ribs.

3. A transmission housing as claimed in claim 1 or claim 2, wherein said at least one vibration control panel (105) is formed integrally with the surrounding section of the sidewall.

4. A transmission housing as claimed in any one of claims 1, 2 or 3, wherein said at least one vibration control panel (105) is joined to the surrounding section of the sidewall by a curved section of the sidewall.

5. A transmission housing as claimed in any one of the preceding claims, wherein the thickness of each vibration control panel (105) and the surrounding section of the sidewall is substantially uniform.

6. A transmission housing as claimed in any one of the preceding claims, wherein said at least one vibration control panel (105) has a concave profile or a convex profile.

7. A transmission housing as claimed in any one of the preceding claims, wherein said at least one vibration control panel (105) has a part cylindrical profile.

8. A transmission housing as claimed in any one of the preceding claims, wherein said at least one vibration control panel (105) has a plan form which is oval.

9. A transmission housing as claimed in claim 8, wherein said oval has first and second ends (117, 119), the first end (117) of said oval being larger than the second end (119).

10. A transmission housing as claimed in any one of the preceding claims, wherein a plurality of said vibration control panels (105) is provided around a circumference of the housing (103).

11. A transmission housing as claimed in claim 10, wherein said vibration control panels (105) have two or more different sizes.

12. A transmission housing as claimed in claim 10 or claim 11, wherein two or more of said vibration control panels (105) are offset relative to each other in a longitudinal direction.

13. A transmission housing as claimed in any preceding claim wherein said housing (103) is formed as a unitary structure.

14. A transmission housing as claimed in any one of the preceding claims, wherein said housing (103) is formed by casting.

15. A transmission housing as claimed in any one of the preceding claims, wherein said transmission housing (103) has a cylindrical or truncated conical shape, optionally wherein said transmission housing (103) is a bellhousing.
